# EUROPÄISCHE PATENTANMELDUNG

(11) **EP 1 690 834 A2**
(43) Veröffentlichungstag der Anmeldung: **16.08.2006**
(21) Anmeldenummer: 06002767.9
(22) Anmeldetag: 10.02.2006
(51) Int. Cl.: C02F 1/52, C01F 7/56

(54) **Polyaluminiumchloridlösung**

(30) Priorität: 14.02.2005 DE 102005006835
(71) Anmelder: Sachtleben Chemie GmbH, 47198 Duisburg (DE)
(72) Erfinder: Marotzki, Heinz, 47259 Duisburg (DE); Vukovic, Ante, 47475 Kamp-Lintfort (DE); Vollmuth, Stefan, Dr., 47803 Krefeld (DE)
(74) Vertreter: Uppena, Franz

(57) **Zusammenfassung**

Gegenstand der vorliegenden Erfindung ist eine sulfatfreie Polyaluminiumchloridlösung hoher Basizität, deren Herstellung und deren Verwendung in der Wasseraufbereitung und Papierherstellung.

## Beschreibung

Gegenstand der vorliegenden Erfindung ist eine sulfatfreie Polyaluminiumchloridlösung hoher Basizität, deren Herstellung und deren Verwendung in der Wasseraufbereitung und Papierherstellung.

ln der Wasseraufbereitung werden gemäß dem Stand der Technik Flockungs- und Koagulierungsmittel eingesetzt. Dies sind in Abhängigkeit von der Art des verschmutzten Wassers üblicherweise Aluminiumverbindungen wie beispielsweise Aluminiumchlorid, Aluminiumsulfat und Polyaluminiumchloride, Eisenverbindungen wie beispielsweise Eisensulfat und Eisenchloride, kationische, anionische und nichtionische Polyelektrolyte wie beispielsweise Polyacrylamid, Polydadmac (Polydiallyldimethylammoniumchlorid), und Polyamin sowie Schichtsilikate wie beispielsweise Bentonit eingesetzt.

Handelsübliche Flockungsmittel werden als wässrige Lösung hergestellt, geliefert und eingesetzt.

Während in industriellen. Abwässern sowohl Aluminium- und Eisensalze als auch Polyelektrolyte verwendet werden, werden in kommunalen Abwässern überwiegend Eisensalze eingesetzt. Dies liegt vor allem in der wirtschaftlicheren Phosphatentfernung durch Eisensalze begründet.

Alle Flockungsmittel müssen durch den Flockungsprozess wieder aus dem Wasser entfernt werden können und dürfen gesetzlich festgelegte Grenzwerte nicht überschreiten. Polyelektrolytrückstände im Trinkwasser sind in vielen Fällen aufgrund ihres Restmonomergehaltes ein gesundheitliches Risiko. Im Wasser verbleibende Eisensalze führen zu einer gelben Färbung und im Falle von Trinkwasser zu einer Geschmacksbeeinträchtigung sowie unansehnlichen braunen Rändern in sanitären Bereichen. Eisen- und Aluminiumkonzentrationen sind im Trink- wie im Abwasserbereich stark reglementiert.

Neben diesen traditionell verwendeten Produkten werden seit einigen Jahren zunehmend Aluminiumhydroxidchloride als Flockungsmittel verwendet, insbesondere für anspruchsvolle Aufgaben wie beispielsweise im Trinkwasserbereich. Aluminiumhydroxidchloride sind als Polyaluminiumchloride (PAC) bekannt und durch die Formel [Al(OH)_{x.} Cly]ₙ, x+y=3 charakterisiert. Dabei ist n die einem Polyrnerisationsgrad vergleichbare Zahl an Aluminumionen im Aluminiumkomplex. Polymere Aluminiumhydroxidchloride eignen sich besser zur Flockung und Koagulation als einfache Aluminiumsalze wie beispielsweise Aluminiumchlorid oder Aluminiumsulfat, wodurch erforderliche Dosiermengen verringert werden können. Anwendererfahrungen bezeugen eine verbesserte Trübstoffaggregation, so dass teilweise auf die Zugabe von Flockungshilfsrnitteln verzichtet werden kann. Der Einsatz von Polyaluminiumchloriden bewirkt außerdem eine geringere Absenkung des pH-Wertes, zudem ist der Eintrag an Anionen in das Wasser geringer als bei Verwendung von Neutralsalzen. Schließlich ist die bessere Wirksamkeit von Polyaluminiumchloriden bei niedrigen Wassertemperaturen zu nennen, für den Winterbetrieb ein nicht zu unterschätzender Vorteil.

In der Papierindustrie werden Polyaluminiumchloride zur Störstoff- und Stärkefixierung, Leimung, Retention, Entwässerung, Abschlussbehandlung und Abwasseroptimierung eingesetzt. Der Vorteil von Polyaluminiumchloriden gegenüber Aluminiumsulfat liegt in einer geringeren Systemaufsalzung, einer geringeren pH-Wert-Absenkung, einer besseren Fixierung von Stör-, Fein- und Hilfsstoffen sowie der ungleich geringeren Kreideauflösung bei Neutralfahrweise,

Kommerziell erhältlich sind zwei Arten von Polyaluminiumchloriden:
Zum einen gibt es die mittel- bis hochbasischen sulfathaltigen Typen mit Basizitäten von 50 bis 75 %, die sich durch eine sehr gute Flockungswirkung und Aluminiumgehalten zwischen 4,0 und 5,5 % auszeichnen. Diese werden hergestellt, indem ein aluminiumhaltiger Rohstoff, beispielsweise Aluminiumhydroxid, mit Schwefelsäure und Salzsäure aufgeschlossen und mit einem basischen, calciumhaltigen Reagenz, wie beispielsweise Calciumhydroxid, neutralisiert wird. Der hierbei anfallende Gips wird abgetrennt (DE-A-1907359, US-A-5603912, US-A-5124139). Ein Nachteil dieses Verfahren ist, dass es verhältnismäßig aufwendig ist und als störendes Nebenprodukt den schon erwähnten, zu entsorgenden Gips hinterlässt. Ein Nachteil der mit diesem Verfahren gewonnenen Produkte ist, dass bei der Anwendung das Sulfat zu Schwefelwasserstoff reduziert wird, was zu erheblichen Geruchsbelästigungen führt.

Zum anderen gibt es die mittelbasischen sulfatfreien Typen mit Aluminiumkonzentrationen zwischen 5,0 und 9,0 %. Diese werden hergestellt, indem ein aluminiumhaltiger Rohstoff, wiederum beispielsweise Aluminiumhydroxid, im Unterschuss mit Salzsäure in einem Druckreaktor bei Temperaturen > 130°C aufgeschlossen wird. Der anfallende Aufschluss ist in der Regel nicht stabil und muss mit Wasser verdünnt werden. Dieses Verfahren hat gegenüber dem Erstgenannten den Vorteil, dass kein störender Gips anfällt. Auch ist bei der Anwendung der mit dem zweiten Verfahren gewonnenen sulfatfreien Typen eine Geruchsbelästigung ausgeschlossen. Ein Beispiel für diese Typen ist das handelsübliche SACHTOKLAR 39 der Firma Sachtleben Chemie GmbH. Diese Typen weisen ein durchschnittliches Flockungsverhalten bei mittleren Basizitäten von 30 bis maximal 50 % auf. Unter "Basizität" versteht man dabei den prozentualen Anteil der OH⁻-lonen an der Gesamt-Anionen-Menge. Als "sulfatfrei" sind hier Flockungsmittel zu verstehen, deren Anteil an Sulfationen kleiner 1 % der Gesamtmasse des Flockungsmittels ist. Alle Stoffmengenangaben in Prozent (%) sind als Gewichtsprozent zu verstehen, evtl. fehlende Anteile bei Mengenangaben sind als Wasseranteil zu ergänzen.

Um eine sulfatfreie Polyaluminiumchloridlösung zur Verfügung zu stellen, die Basizitäten von bis zu 50 % und mehr aufweist, wird in WO-A-0144110 vorgeschlagen, eine Aluminiumchloridlösung [S. 9, Beispiele 10-11] erhältlich aus einem ehemaligen Friedel-Crafts-Katalysator, mit Dolomit umzusetzen.

Auch in Beispiel 12 von WQ-A-0144110 wird Aluminiumchlorid als Edukt eingesetzt [S. 11; Z. 8]. Für den Fachmann offensichtlich, handelt es sich bei der Angabe, dass Polyaluminiumchlorid als Edukt verwendet werden soll [S. 11; Z. 15], um einen Schreibfehler. Polyaluminiumchlorid eignet sich nicht als Katalysator im Friedel-Crafts-Prozess [S. 11; Z. 10], kann also auch nicht daher stammen, da es nicht als wasserfreie Modifikation vorkommt, die zwingend für eine Friedel-Crafts-Reaktion notwendig ist. Daher liegt es für den Fachmann auf der Hand, dass auch Beispiel 12 die Herstellung von Polyalumiumchlorid aus Aluminiumchlorid offenbart.

Die aus WO-A-0144110 erhältlichen Polyaluminiumchloridlösungen haben aber folgende Nachteile:
- bedingt durch das Edukt enthalten die Polyaluminiumchloridlösungen einen hohen Anteil an Cl⁻-Ionen, was zu einer höheren Salzbelastung des zu behandelnden Wassers führt;
- die Konzentration an Al³⁺-lonen beträgt maximal 4,6 % [S. 9, Beispiele 10-11], was sich negativ auf die Flockungseigenschaften der Polyaluminiumchloridlösungen auswirkt;
- Basizitäten oberhalb von 55 %, insbesondere zwischen 60 und 65 %, werden mit diesem Verfahren nicht erreicht, was sich ebenfalls negativ auf die Flockungseigenschaften der Polyaluminiumchloridlösungen auswirkt.

Summa summarum führt die in WO-A-0144110 vorgeschlagene Vorgehensweise von einem Produkt mit geringer Flockungswirkung zu einem Flockungsmittel nur mittlerer Qualität.

Bisher war es nicht möglich, eine sulfatfreies Polyaluminiumchloridlösung mit hohen Basizitäten von mindestens 55 %, Aluminiumgehalten von mindestens 5 %, einer sehr guten Flockungswirkung und einem Chloridgehalt von höchstens 20 % herzustellen.

Aufgabe der vorliegenden Erfindung ist es daher, die Nachteile des Standes der Technik zu überwinden.

Insbesondere ist es Aufgabe der vorliegenden Erfindung, eine sulfatfreie Polyaluminiumchloridlösung mit hohen Basizitäten von mindestens 55% bereitzustellen. Eine weitere Aufgabe der vorliegenden Erfindung ist es, eine sulfatfreie Polyaluminiumchloridlösung mit Aluminiumgehalten von mindestens 5 % bereitzustellen. Eine weitere Aufgabe der vorliegenden Erfindung ist es, eine sulfatfreie Polyaluminiumchloridlösung mit einem Chloridgehalt von höchstens 20 % bereitzustellen. Eine weitere Aufgabe der vorliegenden Erfindung ist es, dass die Hersteflung der erfindungsgemäßen Polyaluminiumchloridlösung ausgehend von einer Polyaluminiumchloridlösung mittlerer Basizität, insbesondere einer handelsüblichen Polyaluminiumchloridlösung mittlerer Basizität, gelingt.

Die erfindungsgemäße Polyaluminiumchloridlösung soll kompakte, stabile, durch Flotation oder Sedimentation problemlos vom Wasser abtrennbare Flocken bilden und außerdem in der Papierindustrie zur Störstoff- und Stärkefixierung, Leimung, Retention, Entwässerung, Abschlussbehandlung und Abwasseroptimierung geeignet sein.

Erfindungsgemäß wird dieses Problem überraschenderweise durch die Merkmale des Hauptanspruchs gelöst. Vorzugsweise Ausgestaltungen finden sich in den Unteransprüchen. Dabei wird erfindungsgemäß als Edukt eine sulfatfreie Polyaluminiumchloridlösung mittlerer Basizität, insbesondere eine handelsübliche Polyaluminiumchloridlösung mittlerer Basizität, mit einem Magnesiumsalz teilneutralisiert. Das Edukt enthält dabei beispielsweise 7 bis 9,5 % Al³⁺ und 15 bis 23 % Cl⁻. Als ein solches Edukt eignet sich unter anderen das bereits erwähnte SACHTOKLAR 39 mit einer Basizität von 40 %, ohne jedoch diese Erfindung darauf zu beschränken.

Zur Stabilisierung der erfindungsgemäßen Polyaluminiumchloridlösung können noch Borsäure und/oder deren Derivate zugesetzt werden. Es entsteht eine sulfatfreie Polyaluminiumchloridlösung mit einer hohen Basizität von über 55 %, insbesondere über 60 %, sowie einem Aluminiumgehalten von teilweise über 7 %. Der Chloridionengehalt beträgt dabei höchstens 20 %.

Die Neutralisierung wird in einem Rührreaktor unter Zugabe Von Magnesiumsalz und Wasser durchgeführt. Als Magnesiumsalze werden Magnesiumcarbonat und/oder Magnesiumhydroxid verwendet. Bezogen auf die Masse des Produktes in Kilogramm werden 400 bis 900 g/kg handelsübliches Polyaluminiumchlorid mit 15 bis 150 g/kg Magnesiumcarbonat oder alternativ 10 bis 100 g/kg Magnesiumhydroxid neutralisiert, anschließend können 5 bis 50 g/kg Borsäure zugeben werden, um das Produkt zu stabilisieren,

Zusätzlich kann das Produkt noch mit Polyelektrolyten in den Verhältnissen 99 : 1 bis 1 :2 versetzt werden. Vorzugsweise werden dazu Polyelektrolyt-Lösungen auf kationischer Polyamin-, Polydadmac und/öder Polyacrylamid-Basis verwendet.

Das Flockungsverhalten dieser magnesiummodifizierten Polyaluminiumchloride übertrifft das Flockungsverhalten aller handelsüblichen Polyaluminiumchlorid-Produkte deutlich.

Gegenstand der vorliegenden Erfindung ist im Einzelnen:
- ein Verfahren zur Herstellung einer sulfatfreien Polyaluminiumchloridlösung hoher Basizität durch Teilneutralisation einer sulfatfreien Polyaluminiumchloridlösung mittlerer Basizität mit einem Erdalkalisalz;
- ein Verfahren zur Herstellung einer sulfatfreien Polyaluminiumchloridlösung hoher Basizität, wobei - bezogen auf die Masse des fertigen Produktes - 400 bis 900 g/kg einer sulfatfreien Polyaluminiumchloridlösung mittlerer Basizität, bevorzugt einer handelsüblichen sulfatfreien Polyaluminiumchloridlösung mittlerer Basizität, mit 15 bis 150 g/kg Anteilen des Erdalkalisalzes neutralisiert werden.
- ein Verfahren zur Herstellung einer sulfatfrelen Polyaluminiumchloridlösung hoher Basizität, wobei es sich beim Erdalkalisalz um Magnesiumcarbonat oder Magnesiumhydroxid oder Mischungen aus diesen handelt.
- ein Verfahren zur Herstellung einer sulfatfreien Polyaluminiumchloridlösung hoher Basizität, das folgende Verfahrensschritte umfasst:
   - Versetzen einer Polyaluminiumchloridlösung mittlerer Basizität mit Erdalkalisalzen unter Rühren bei Raumtemperatur;
   - Erhöhung der Temperatur auf 40 bis 80°C, bevorzugt auf 50 bis 70°C, unter weiterem Rühren bis zum vollständigen Lösen des Erdalkalisalzes;
- ein Verfahren zur Herstellung einer sulfatfreien Polyaluminiumchloridlösung hoher Basizität, wobei der fertigen Polyaluminiumchloridlösung Borsäure und/oder ein oder mehrere Derivate der Borsäure zugesetzt werden;
- ein Verfahren zur Herstellung einer sulfatfreien Polyaluminiumchloridlösung hoher Basizität, wobei das entstandene Konzentrat mit Wasser verdünnt wird;
- ein Verfahren zur Herstellung einer sulfatFreien Polyaluminiumchloridlösung hoher Basizität, wobei die erfindungsgemäße Polyaluminiumchloridlösung mit einem Polyelektrolyten, bevorzugt mit einem Polyelektrolyten ausgewählt aus der Gruppe Polyacrylamid, Polydadmac, Polyamin oder Mischungen aus diesen, besonders bevorzugt mit einem Polyacrylamid, gemischt wird;
- eine Polyaluminiumchloridlösung, die eine Basizität von 55 bis 75, bevorzugt von 60 bis 65 %, aufweist und 5 bis 8 %, bevorzugt 5 bis 7,5 % Al³⁺-lonen sowie 0,1 bis 7 %, bevorzugt 0,4 bis 5 %, besonders bevorzugt 1,2 bis 2,5 %, Mg²⁺-lonen enthält;
- eine Polyaluminiumchloridlösung, die eine Basizität von 55 bis 75, bevorzugt von 60 bis 65 %, aufweist und 4,8 bis 7,5 %, bevorzugt 4,8 bis 7 % Al³⁺-lonen, 0,1 bis 7 %, bevorzugt 0,4 bis 5 %, besonders bevorzugt 1,2 bis 2,5 % Mg²⁺-lonen und 0,2 bis 5 %, bevorzugt 0,5 bis 2 %, besonders bevorzugt 1 bis 1,5 % Wirkstoffanteil Polyelektrolyt enthält;
- eine Polyaluminiumchloridlösung, die 3 bis 20 %, bevorzugt 7 bis 19 %, besonders bevorzugt 11 bis 18 % Cl⁻-Ionen enthält;
- eine Polyaluminiumchloridlösung, die 0,1 bis 3 %, bevorzugt 0,3 bis 2 %, besonders bevorzugt 0,7 bis 1,2 % B³⁺-Ionen enthält;
- eine Polyaluminiumchloridlösung, erhältlich nach einem oder mehren der erfindungsgemäßen Verfahren;
- Verwendung einer erfindungsgemäßen Polyatuminiumchloridlösung als Flockungsmittel;
- Verwendung einer erfindungsgemäßen Polyaluminiumchloridlösung in der Wasseraufbereitung;
- Verwendung einer erfindungsgemäßen Polyaluminiumchloridlösung in der Papierindustrie;
- Verwendung einer erfindungsgemäßen Polyaluminiumchloridlösung zur Störstoff-und Stärkefixierung, Leimung, Retention, Entwässerung, Abschlussbehandlung und Abwasseroptimierung;

Die erfindungsgemäße Polyaluminiumchloridlösung besitzt überlegene Flockungseigenschaften, die aus der hohen Basizität und dem hohen Aluminiumgehalt herrühren. Dies führt zu geringeren Einsatzmengen und darüber hinaus zu einer geringer pH-Absenkung des behandelten Wassers als Folge der höheren Basizität. Aufgrund des geringen Chloridionengehaltes führt die Verwendung der erfindungsgemäßen Polyaluminiumchloridlösung nur zu einer geringen Systemaufsalzung. Ein höherer Aluminiumgehalt und damit eine höhere Wirkstoffkonzentration in einer wässrigen Lösung wirkt sich ebenfalls vorteilhaft auf die Transportkosten aus, da weniger Wasser transportiert werden muss.

Die Erfindung wird durch die nachstehenden Ausführungsbeispiele näher erläutert, ohne sie darauf einzuschränken:

### Beispiel 1

590 g eines kommerziellen Polyaluminiumchlorids (8,9 % Al³⁺-Ionen, 21,0 % Cl-Ionen, Basizität: 40 %) werden unter Rühren bei Raumtemperatur mit 40 g Mg(OH)₂ versetzt. Anschließend wir die Lösung auf 60°C erwärmt und bis zum vollständigen Lösen des Magnesiumsalzes gerührt. Das Konzentrat wird anschließend mit 370 g Wasser verdünnt. Das Produkt hat folgende Zusammensetzung: 5,3 % Al³⁺-Ionen, 12,4 % Cl⁻-Ionen, 1,7 % Mg²⁺-Ionen; Basizität: 64 %. Das Produkt wird nach 6 Wochen zu einem Gel.

### Beispiel 1a

590 g eines kommerziellen Polyaluminiumchlorids (8,9 % Al³⁺-Ionen, 21,0 % Cl-Ionen, Basizität: 40 %) werden unter Rühren bei Raumtemperatur mit 40 g Mg(OH)₂ versetzt. Anschließend wird die Lösung auf 60°C erwärmt und bis zum vollständigen. Lösen des Magnesiumsalzes gerührt. In dieser Lösung werden 9 g B(OH)₃ unter Rühren gelöst. Das Konzentrat wird anschließend mit 370 g Wasser verdünnt. Das Produkt hat folgende Zusammensetzung: 5,3 % Al³⁺-lonen, 12,4 % Cl⁻-lonen, 1,7 % Mg²⁺-lonen, 0,9 % B³⁺-lonen; Basizität: 64 %. Das Produkt ist über 6 Monate als Lösung stabil.

### Beispiel 2

830 g eines kommerziellen Polyaluminiumchlorids (8,9 % Al³⁺-Ionen, 21,0 % Cl-Ionen, Basizität: 40 %) werden unter Rühren bei Raumtemperatur mit 55 g Mg(OH)₂ versetzt. Anschließend wir die Lösung auf 60°C erwärmt und bis zum vollständigen Lösen des Magnesiumsalzes gerührt. Das Konzentrat wird anschließend mit 115 g Wasser verdünnt. Das Produkt hat folgende Zusammensetzung: 7,4 % Al³⁺-Ionen, 17,4 % Cl⁻-Ionen, 2,3 % Mg²⁺-lonen; Basizität: 63 %. Das Produkt wird nach 6 Wochen zu einem Gel.

### Beispiel 2a

830 g eines kommerziellen Polyaluminiumchlorids (8,9 % AI³⁺-lonen, 21,0 % Cl-lonen, Basizität: 40 %) werden unter Rühren bei Raumtemperatur mit 55 g Mg(OH)₂ versetzt. Anschließend wird die Lösung auf 60°C erwärmt und bis zum vollständigen Lösen des Magnesiumsalzes gerührt. In dieser Lösung werden 11 g B(OH)₃ unter Rühren gelöst. Das Konzentrat wird anschließend mit 115 g Wasser verdünnt. Das Produkt hat folgende Zusammensetzung: 7,4 % Al³⁺-lonen, 17,4 % Cl⁻-lonen, 2,3 % Mg²⁺-lonen, 1,1 % 8³⁺-lonen; Basizität: 63 %. Das Produkt ist über 6. Monate als Lösung stabil.

### Beispiel 3

Das Produkt aus Beispiel 1a wird mit einem flüssigen Polyelektrolyten auf Basis eines Polyacrylamids (12 % Wirkstoffanteil) im Verhältnis 9:1 gemischt. Das Produkt hat folgende Zusammensetzung: 4,8 % Al³⁺-Ionen, 11,2 % Cl⁻-Ionen, 1,5 % Mg²⁺⁻Ionen, 0,8 % B³⁺-Ionen, 1,2 % Wirkstoffanteil Polyelektrolyt; Basizität: 64 %.

### Beispiel 3a

Das Produkt aus Beispiel 2a wird mit einem flüssigen Polyelektrolyten auf Basis eines Polyacrylamids (12 % Wirkstoffanteil) im Verhältnis 9 zu 1 gemischt. Das Produkt hat folgende Zusammensetzung: 6,7 % Al³⁺-Ionen, 15,7 % Cl⁻-Ionen, 1,4 % Mg²⁺-Ionen, 1,0 % B³⁺-Ionen, 1,2 % Wirkstoffanteil Polyelektrolyt; Basizität: 63 %.

### Beispiel 4

In diesem Beispiel werden die Produkte aus den Beispielen 1a, 2a, 3 und 3a mit einem herkömmlichen sulfathaltigen Polyaluminiumchlorid (hergestellt nach DE-A-1907359) und dem handelsüblichen sulfatfreien Flockungsmittel SACHTOKLAR 39 in ihrem Flockungsverhalten verglichen. Die entscheidenden Inhaltsstoffe und die Basizitäten der jeweiligen Produkte sind nochmals in Tabelle 1 vergleichend dargestellt.

**Tabelle 1**

| | **Beispiel 1a** | **Beispiel 2a** | **Beispiel 3** | **Beispiel 3a** | **PAC nach DE 1907359** | **SACHTOKLAR 39** |
|---|---|---|---|---|---|---|
| **Al**^{**3+**} **[%]** | 5,3 | 7,4 | 4,8 | 6,7 | 5,3 | 8,9 |
| **Cl**^{**-**}**[%]** | 12,4 | 17,4 | 11,2 | 15,7 | 9,0 | 21,0 |
| **SO**_{**4**}^{**2-**}**[%]** | - | - | - | - | 2,8 | - |
| **Mg**^{**2+**}**[%]** | 1,7 | 2,3 | 1,5 | 1,4 | - | - |
| **B**^{**3+**}**[%]** | 0,9 | 1,1 | 0,8 | 1,0 | - | - |
| **OH**^{**-**}**[%]** | 6,4 | 8,8 | 5.8 | 7,1 | 4,7 | 6,7 |
| **Basizität[%]** | 64 | 63 | 64 | 63 | 47 | 40 |

Für den Vergleich des Flockungsverhaltens wurde ein Standard-Jar-Test mit einem mit 100 ppm Pulveraktivkohle künstlich verschmutztem Wasser verwendet. Die dosierte Aluminiumkonzentration betrug jeweils 5,3 ppm. Der Jar-Test oder Becherglasversuch ist der Standardversuch für die Überprüfung der Flockungswirkung von Primärflockungsmitteln. Um unterschiedliche mechanische Einflüsse weitest möglich auszuschließen, werden vergleichende Flockungstests in einer Serie von Bechergläsern mit mechanisch gekoppelten, identisch ausgebildeten Blattrührern durchgeführt, wobei die zu vergleichenden Produkte zeitgleich zugegeben werden. Zur genauen Dosierung werden die zu prüfenden Flockungsmittel als 10 %ige Lösung frisch angesetzt. Nach Vorlage von 1 Liter Wasser pro Becherglas werden jeweils 1,0 ml Aktivkohle-Suspension unter Rühren kurz eingemischt. Das so künstlich verunreinigte Wasser wird auf pH-Wert, Temperatur und eventuell auf Alkalien-/Erdalkaliengehalt überprüft. Nach Abmessen einer aluminiurngleichen Dosiermenge wird diese Dosiermenge den einzelnen Testmuster gleichzeitig zugegeben und unter starkem Rühren (200 bis 220 Upm) 60 Sekunden lang eingemischt. Anschließend wird 4 Minuten bei 20 bis 30 Upm nachgerührt. Nach Hochziehen der Rührblätter sollen die entstandenen Flocken ca. 25 Minuten sedimentieren. Die Parameter Flockenausbildung, Flockengröße, Sedimentations- und Trübstoff-Eliminierungsrate bestimmen gemeinsam die Wirksamkeit eines Flockenmittels. Bereits während der Einmisch- und Nachrührphase ist die Flockenausbildung sowie die Entwicklung der Flockengröße für die jeweiligen Produkte über die Zeit visuell zu beobachten und relativ zueinander zu beschreiben. Außerdem ist das Sedimentationsverhalten der Flocken festzuhalten, sowie pH-Wert und Temperatur zu kontrollieren. Die Klanheit des Überstandes wird durch Trübungsmessung nach der Sedimentation erfasst. Hierzu werden 50 bis 75 ml des Überstandes aus mittlerer Becherglashöhe entnommen und die Trübung in Nephelometrie-TrLibungs-Einheiten (oder Nephelometric Turbidity Units) [NTU] angegeben. Die Untersuchungsergebnisse sind in der Tabelle 2 wiedergegeben.

**Tabelle 2**

| | **Beispiel 1a** | **Beispiel 2a** | **Beispiel 3** | **Beispiel 3a** | **PAC nach DE 1907359** | **SACHTOKLAR 39** |
|---|---|---|---|---|---|---|
| **Flockenausbildung** | Sehr gut | Sehr gut | Sehr gut | Sehr gut | Gut | Mäßig |
| **Flockengröße [mm]** | 2,0-4,0 | 2,0-4,0 | 3,0-5,0 | 3,0-5,0 | 1,5-2,5 | 0,5-1,5 |
| **t**_{**sed.**}**[s**] | 30 | 15 | 20 | 10 | 45 | 90 |
| **Trübung vorher [NTU]** | 15,2 | 15,2 | 15,2 | 15,2 | 15,2 | 15,2 |
| **Trübung nachher [NTU]** | 0,29 | 0,21 | 0,19 | 0,16 | 0,39 | 0,67 |

Tabelle 2 zeigt deutlich, dass die magnesiummodifizierten Polyaluminiumchloride aus Beispielen 1a und 2a den kommerziellen Polyaluminiumchloride hinsichtlich der Flockungseigenschaft und der Trübungsentfernung überlegen sind. Da für Beispiele 1 a und 2a ein handelsübliches sulfatfreies Flockungsmittel als Edukt eingesetzt wurde, zeigen die Ergebnisse, dass man die Flockungsleistung dieser herkömmlichen Polyaluminiumchloride durch eine Modifizierung mit Magnesium deutlich steigern kann. Die Zugabe von Borsäure bzw. Derivaten der Borsäure führt lediglich zu einer Stabilisierung der Lösung im Vergleich zu Produkten nach den Beispielen 1 und 2.

Die Kombination der Produkte aus den Beispielen 1 a und 2a mit flüssigen Polymeren, dargestellt in den Beispielen 3 und 3a, führt zu Produkten mit nochmals verbesserten Flockungseigenschaften.

### Beispiel 5

In diesem Beispiel wurden die Produkte aus den Beispielen 1a, 2a und 3 mit einem herkömmlichen sulfathaltigen Polyaluminiumchlorid (hergestellt nach DE-A-1907359) und dem handelsüblichen Polyaluminiumchlorid SACHTOKLAR 39 in ihrem für die Papierherstellung wichtigen Entwässerungsverhalten, bei der Störstofffixierung und der Leimung, verglichen. Die Entwässerungsversuche wurden auf einem Schopper-Riegler-Gerät durchgeführt. Gemessen wurde die Entwässerungszeit einer Standardpulpe (70 % Zellstoff, 30 % Altpapier). Die Resttrübung des Filtrats und der CSB (Chemischer Sauerstoffbedarf) geben Aufschluss über die Retention und Störstofffixierung der Produkte. Die Leimung wurde an einem Standardpapiersystem (2,4 g Zellstoff, ofentrocken (otro), Prüfblätter: 80 glm², 20% CaCO₃) mit unterschiedlichen Leimkonzentrationen über den Cobb₆₀-Wert getestet. Bei der Nullprobe wurde die Messung ohne Zugabe eines Flockungsmittels durchgeführt.

**Tabelle 3**

| | **Null-Probe** | **Beispiel 1a** | **Beispiel 2a** | **Beispiel 3** | **PAC nach DE 1907359** | **SACHTOKLAR 39** |
|---|---|---|---|---|---|---|
| **Entwässerungszelt für 500 ml [min] (1 % otro)** | 66 | 52 | 45 | 40 | 56 | 60 |
| **Trübung des Filträts [NTU] (1 % otro)** | 128 | 74 | 62 | 58 | 80 | 103 |
| **CSB [mg/l] (1 % otro)** | 77 | 67 | 59 | 55 | 68 | 70 |
| **Leimung Cobb**_{**60**} | | | | | | |
| **PAC/Leim [% otro]** | | | | | | |
| **2,5** | - | 52 | 43 | 55 | 45 | 50 |
| **3,0** | - | 27 | 29 | 32 | 27 | 22 |
| **3,5** | - | 23 | 22 | 28 | 24 | 21 |
| **4,0** | - | 18 | 19 | 23 | 19 | 20 |

Tabelle 3 zeigt deutlich, dass das erfindungsgemäße Polyaluminiumchlorid (Beispiel 1a und 2a) ein vergleichbares Entwässerungs-, Retentions- und Störstofffixierungsverhalten besitzt wie herkömmliches Polyaluminiumchlorid. Die Kombination mit einem kationischen Polymer (Beispiel 3) führt zwar zu einer besseren Entwässerung und Störstofffixierung, doch das Leimungsverhalten ist schlechter als bei erfindungsgemäßen und handelsüblichen Polyaluminiumchloriden.

## Patentansprüche

1. Verfahren zur Herstellung einer sulfatfreien Polyaluminiumchloridlösung hoher Basizität durch Teilneutralisation einer sulfatfreien Polyalurivniumchloridlösung mittlerer Basizität mit einem Erdalkalisalz.

2. Verfahren nach Anspruch 1, **dadurch gekennzeichnet, dass**- bezogen auf die Masse des fertigen Produktes - 400 bis 900 g/kg einer sulfatfreien Polyaluminiumchloridlösung mittlerer Basizität, bevorzugt einer handelsüblichen sulfatfreien Polyaluminiumchloridlösung mittlerer Basizität, mit 15 bis 150 g/kg Anteilen des Erdalkalisalzes neutralisiert werden.

3. Verfahren nach Anspruch 1 oder 2, **dadurch gekennzeichnet, dass** es sich beim Erdalkalisalz um Magnesiumcarbonat oder Magnesiumhydroxid oder Mischungen aus diesen handelt.

4. Verfahren nach einem oder mehreren der Ansprüche 1 bis 3, **dadurch gekennzeichnet, dass** es folgende Verfahrensschritte umfasst:
- Versetzen einer Polyaluminiumchloridlösung mittlerer Basizität mit Erdalkalisalzen unter Rühren bei Raumtemperatur;
- Erhöhung der Temperatur auf 40 bis 80°C, bevorzugt auf 50 bis 70°C, unter weiterem Rühren bis zum vollständigen Lösen des Erdalkalisalzes.

5. Verfahren nach einem oder mehreren der Ansprüche 1 bis 4, **dadurch gekennzeichnet, dass** der fertigen Polyaluminiumchloridlösung Borsäure und/oder ein oder mehrere Derivate der Borsäure zugesetzt werden.

6. Verfahren nach einem oder mehreren der Ansprüche 1 bis 5, **dadurch gekennzeichnet, dass** das entstandene Konzentrat mit Wasser verdünnt wird.

7. Verfahren nach einem oder mehreren der Ansprüche 1 bis 6, **dadurch gekennzeichnet, dass** die erfindungsgemäße Polyaluminiumchloridlösung mit einem Polyelektrolyten, bevorzugt mit einem Polyelektrolyten ausgewählt aus der Gruppe Polyacrylamid, Polydadmac, Polyamin oder Mischungen aus diesen, besonders bevorzugt mit einem Polyacrylamid, gemischt wird.

8. Polyaluminiumchloridlösung, **dadurch gekennzeichnet, dass** sie eine Basizität von 55 bis 75, bevorzugt von 60 bis 65 %, aufweist und 5 bis 8 %, bevorzugt 5 bis 7,5 %, Al³⁺-lonen sowie 0,1 bis 7 %, bevorzugt 0,4 bis 5 %, besonders bevorzugt 1,2 bis 2,5 %, Mg²⁺-lonen enthält.

9. Polyaluminiumchloridlösung, **dadurch gekennzeichnet, dass** sie eine Basizität von 55 bis 75, bevorzugt von 60 bis 65 %, aufweist und 4,8 bis 7,5 %, bevorzugt 4,8 bis 7 %, Al³⁺-lionen, 0,1 bis 7 %, bevorzugt 0,4 bis 5 %, besonders bevorzugt 1,2 bis 2,5 %, Mg²⁺-lonen sowie 0,2 bis 5 %, bevorzugt 0,5 bis 2 %, besonders bevorzugt 1 bis 1,5 %, Wirkstoffanteil Polyelektrolyt enthält.

10. Polyaluminiumchloridlösung nach Anspruch 8 oder 9, **dadurch gekennzeichnet, dass** sie 3 bis 20 %, bevorzugt 7 bis 19 %, besonders bevorzugt 11 bis 18 %, Cl-lonen enthält.

11. Polyaluminiumchloridlösung nach einem oder mehreren der Ansprüche 8 bis 10, **dadurch gekennzeichnet, dass** sie 0,1 bis 3 %, bevorzugt 0,3 bis 2 %, besonders bevorzugt 0,7 bis 1,2 %, B³⁺-lonen enthält.

12. Polyaluminiumchloridlösung, erhältlich nach einem oder mehreren der Ansprüche 1 bis 7.

13. Verwendung einer Polyaluminiumchloridlösung nach einem oder mehreren der Ansprüche 8 bis 12 als Flockungsmittel.

14. Verwendung einer Polyalummiumchloridlösung erhältlich nach einem oder mehreren der Ansprüche 8 bis 12 in der Wasseraufbereitung.

15. Verwendung einer Polyaluminiumehloddiösung erhältlich nach einem oder mehreren der Ansprüche 8 bis 12 in der Papierindustrie.

16. Verwendung einer Polyaluminiumchloridlösung erhältlich nach einem oder mehreren der Ansprüche 8 bis 12 zur Störstoff- und Stärkefixierung, Leimung, Retention, Entwässerung, Abschlussbehandlung und Abwasseroptimierung.
